(19) Europäisches Patentamt

European Patent Office

Office européen des brevets

(11) **EP 0 978 443 A2**

(12) **EUROPEAN PATENT APPLICATION**

(43) Date of publication:
09.02.2000 Bulletin 2000/06

(51) Int. Cl.[7]: **B62D 33/04**

(21) Application number: 99202253.3

(22) Date of filing: 09.07.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 06.08.1998 IT RE980087

(71) Applicant: FURGOCAR - S.r.l.
I-42100 Reggio Emilia (IT)

(72) Inventor:
**Panciroli, Marco,
c/o Furgocar S.r.l.
42100 Reggio Emilia (IT)**

(74) Representative:
**Corradini, Corrado et al
Studio Ing. C. CORRADINI & C. S.r.l.
4, Via Dante Alighieri
42100 Reggio Emilia (IT)**

(54) **System and method for constructing a rectangular frame for a heat-insulating van body**

(57) For each frame vertex there is provided a pair of rigid mutual connection blocks (21, 22) shaped to be rigidly joined together in pairs at a right angle, with mutual contact between one face of one and one face of the other, and each to be inserted into the C-shaped portion (13) of a respective beam; each block (21, 22) is of parallelepiped shape and has three flat longitudinal faces, pairs of which are mutually perpendicular, and which are to be brought into coplanar contact with the inner surfaces of the C-shaped portion (13) of the beam; connection means (41, 41') are provided to rigidly join the two blocks (21, 22) together at a right angle, with mutual contact between a contact face (23) of one and a contact face (22b) of the other; each block (21, 22) has first transverse holes (27, 28) passing perpendicularly through the inner and outer longitudinal faces of the block and provided at a predetermined exact distance from elements for connecting the two blocks together. At the ends of the beams there are provided second transverse through holes (17, 18) formed in the inner and outer walls of the section bar, in a position corresponding with the first transverse holes (27, 28) of the block when this is inserted into coplanar contact with the inner surfaces of the front walls (15a, 15b, 15c) of the relative beam, said second holes (17, 18) being provided at a predetermined exact distance from the second holes (17, 18) positioned at the other end of the same beam, this distance determining the length of the side of the frame; each block (21, 22) is fixed to the end of the respective beam by rivet fixing means, or equivalent, inserted through said first transverse holes (27, 28) provided in the block and through said second transverse holes (17, 18) provided in the section bar, after bringing the front longitudinal face (21c, 22c) of the block (21, 22) into coplanar contact with the inner surface of the front wall (15c) of the beam (11, 12).

FIG.5

**Description**

This invention relates to the construction of a rectangular frame for a heat-insulating van body.

It is known to construct a heat-insulating van body from panels insulated with heat-insulating material which are joined to each other and, via one edge, to a frame formed from beams consisting of segments of profiled section bars, the cross-section of which possesses at least one C-shaped portion. The body is usually composed of five panels which define its two vertical side walls, its horizontal top and base, and its vertical front wall. The perimeter of the vertical rear face of the van body is defined by said rectangular frame. The cross-section of the constituent beams of this frame is shaped to receive the rear edge of the panels as an exact fit. In addition to acting as a structural element for supporting, stiffening and securing the panels, the frame usually acts as a jamb for at least one door for closing the rear face of the van body.

The frame is usually composed of four beams joined together by welding to form a right angle at the vertices of the rectangle.

One method used for assembling the body is firstly to assemble the panels by joining them together by adhesive along their common edges, taking care to set the panels at right angles by usual expedients, such as by checking the length of the diagonals, then after the adhesive has set the frame beams are placed separately along the rear edge of the walls, this edge being used as a jig for tacking the frame onto it. The beams are firstly joined together provisionally with a few spot welds while positioned on the edge of the panels, and are then finally welded together separate from them. The frame is finally mounted on the rear edge of the van body and fixed to the panels by adhesive.

Although this method allows very flexible production as the frames are formed to the required size, it requires a very lengthy construction time together with the use of expert and able labour. In this respect it is done largely without the aid of instruments and requires high manual ability.

Another method used for assembling the body comprises firstly assembling the frame by welding with the aid of suitable jigs, by which the beams are positioned and retained in their correct mutual geometrical relationship. The frame is then used to mount and fix the panels, acting both as a structural element and as a jig for determining the body geometry.

Although this method involves simple operations and a relatively small assembly time in forming the frame and consequently the body, it does not allow flexible production as every dimension change requires a different appropriate jig, each of which is relatively expensive. In practice, this method is used for series or semi-series production, with only a few different models.

An object of the present invention is to provide a method and system for constructing said frame which enable the advantages of both said methods to be obtained ie, in short, considerable flexibility of the frame geometry (shape and dimensions), and quick, simple and accurate frame assembly.

This and further objects are attained by the invention as characterised in the claims.

The invention comprises:

- forming rigid blocks shaped to enable them to be rigidly joined together in pairs at a right angle to each other, with mutual contact between one face of one and one face of the other, one pair of blocks being provided for each frame vertex,
- inserting said rigid blocks as an exact fit into the C-shaped portions at the ends of the respective beams, each block being of a parallelepiped shape able to be brought into coplanar contact with the inner surfaces of the C-shaped portion of the beam,
- forming in each block first through transverse holes perpendicular to the inner and outer longitudinal faces of the block, said transverse holes being formed at a predetermined exact distance from elements for connecting together the two blocks,
- forming second through transverse holes in the inner and outer walls of the section bar at the end of the beams, in a position corresponding with the first transverse holes, said second transverse holes being formed, in each beam, at a distance apart which determines the length of the frame wall,
- transversely cutting the ends of each beam in a measured position with reference to the position of the relative second transverse holes positioned close to the end,
- fixing each block to the end of the respective beam by rivet-type fixing means or equivalent, inserted through said first transverse holes provided in the block and through said second transverse holes provided in the section element, fixing being carried out after positioning the front longitudinal face of the block in coplanar contact with the inner surface of the front wall of the beam, and
- rigidly joining the two blocks together at a right angle to each other along said contacting faces by connection or joining means.

In particular, according to a preferred embodiment, each said block is of parallelepiped shape and has three flat longitudinal faces pairs of which are perpendicular to each other, to be positioned in coplanar contact with the inner surfaces of the C-shaped portion of the beam. A first of the two blocks has a transverse face, perpendicular to the longitudinal faces, to be brought into coplanar contact with the inner longitudinal face of the second block, and at least one screw hole of longitudinal axis provided in said transverse face, for engagement with the shank of a clamping screw for the two blocks. The second block has at least one through hole passing perpendicularly through the inner longitudinal face of the block and coaxial to the hole in the first block, to receive the shank of the clamping screw as an exact fit. Said first transverse holes are formed at a predetermined exact distance from the transverse face in the case of the first block, and from the axis of said own screw hole in the case of the second block. Finally, said blocks are joined together by at least one connection screw, which is inserted through the through hole of the second block and engages in the screw hole of the first block.

The invention is described in detail hereinafter with the aid of the accompanying figures, which illustrate a non-exclusive embodiment thereof.

Figure 1 is an overall perspective view of an insulated body for a heat-insulating van which uses a frame of the invention.

Figure 2 is an exploded view of Figure 1.

Figure 3 is an exploded enlarged detail of Figure 1, limited to the frame alone.

Figure 4 is a front view of Figure 3, with the frame assembled.

Figure 5 is an enlarged detail of Figure 4, regarding a corner of the frame.

Figure 6 is a side view in the direction of the arrow VI of Figure 5.

Figure 7 is an exploded enlarged detail of Figure 3, regarding a corner of the frame.

Figure 8 is a perspective view of the frame corner of Figure 7, taken from the inside.

Figure 9 is a section on the plane IX-IX of Figure 6.

Figures 10A and 10B show the flat plates 11A and 12A respectively, from which the relative beam 11 and 12 is obtained by bending.

Figure 11 is a front view of a detail of the frame of Figure 3, regarding a door hinge.

Figure 12 is a side view in the direction of the arrow XII of Figure 11, with some parts removed.

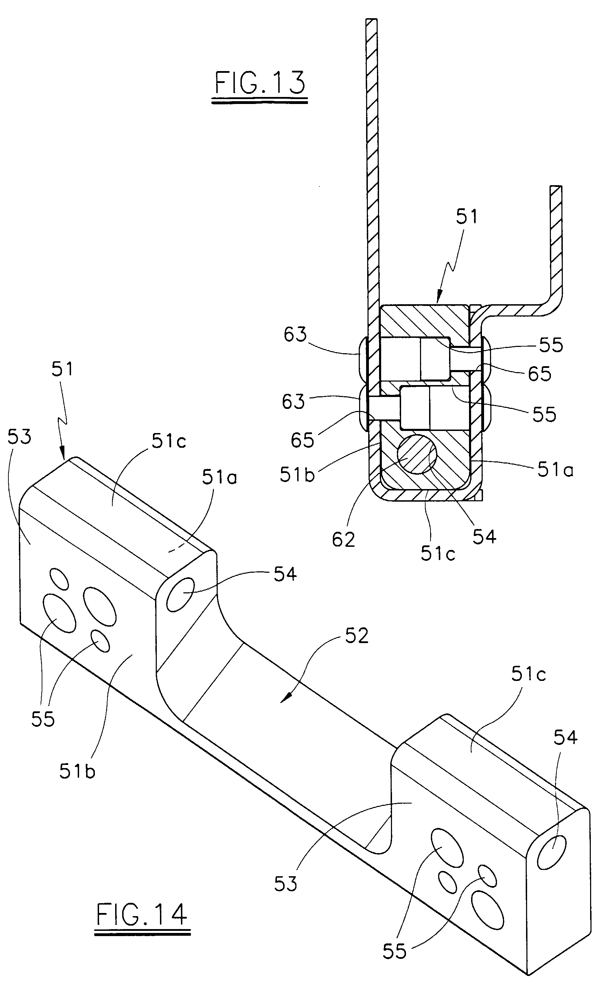

Figure 13 is a section on the plane XIII of Figure 11.

Figure 14 is a perspective view of the third block 51 of Figure 12.

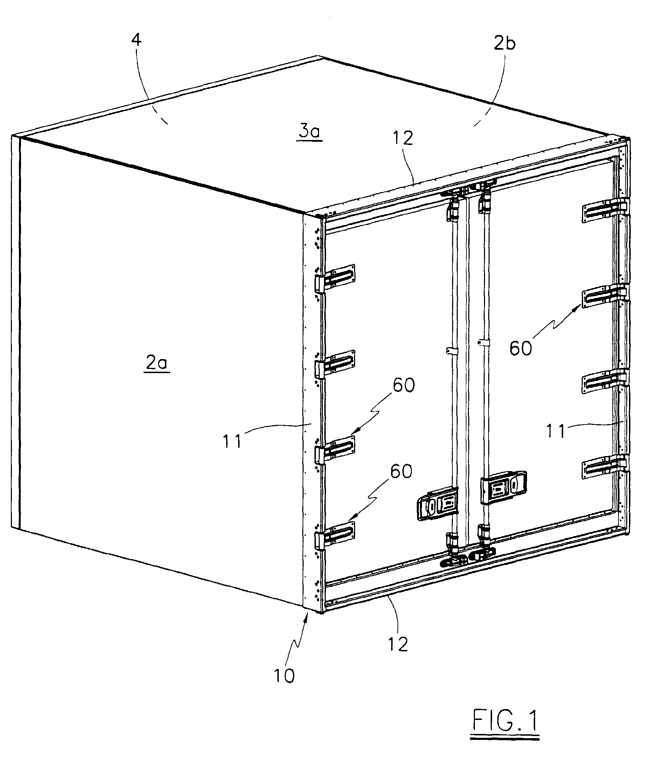

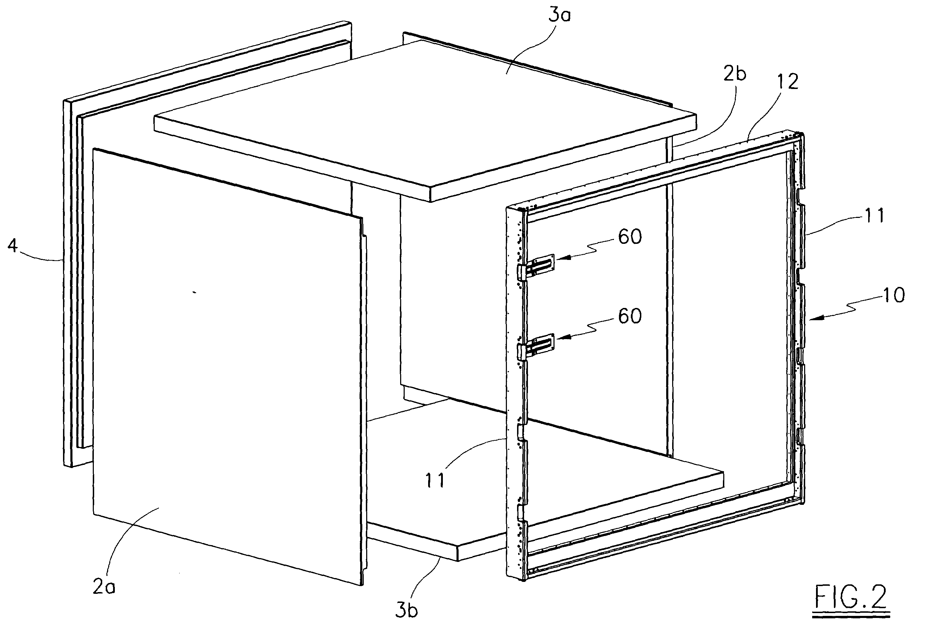

By way of example, Figures 1 and 2 show a van body of the type comprising a frame according to the invention.

The body is composed of five panels defining the two vertical side walls 2a and 2b, the horizontal top 3a and base 3b, and the vertical front wall 4 positioned at the forward end (with reference to the travel direction) of the vehicle. The perimeter of the rear vertical face of the block is defined by the rectangular frame 10 according to the invention.

The frame 10 is composed of four beams, namely two vertical beams 11 and two horizontal beams 12, joined together at right angles at their ends to form a rectangle. The beams 11 and 12 are formed from section bars (ie elements having the same cross-section at every point of their length). The cross-section of these section bars is shaped to receive the rear edge of the panels as an exact fit. Besides serving as a structural element for supporting, stiffening and securing the panels forming the walls of the vehicle body, the frame 10 usually serves as the jamb for at least one door which closes the rear face of the body.

The panel edges are step-shaped to fit better together. In contrast, the rear edges of said panels are smooth for insertion into the cross-section of the beams 11 and 12, to which they are securely fixed by pins and/or an appropriate adhesive.

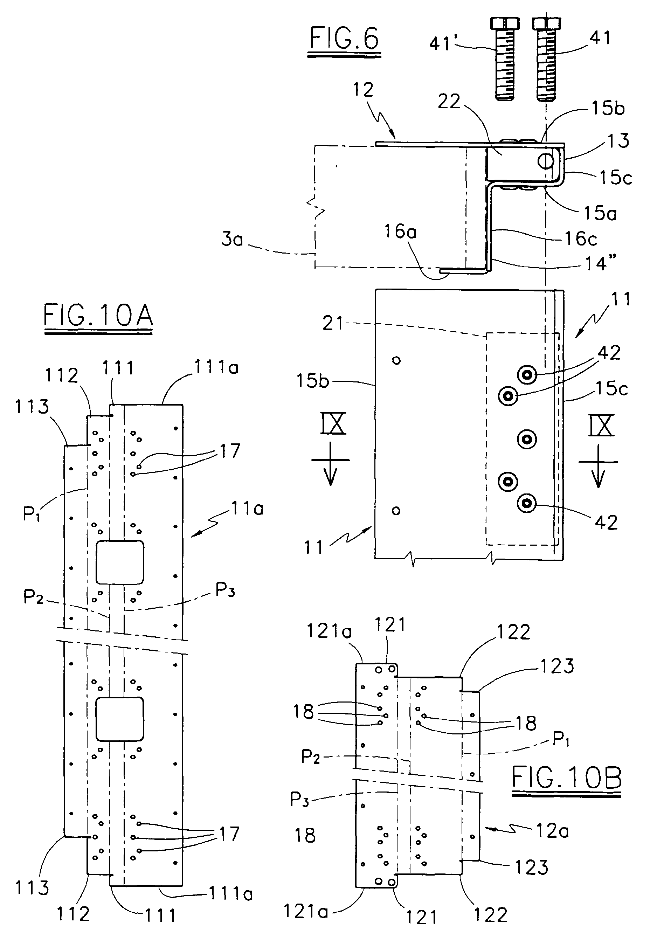

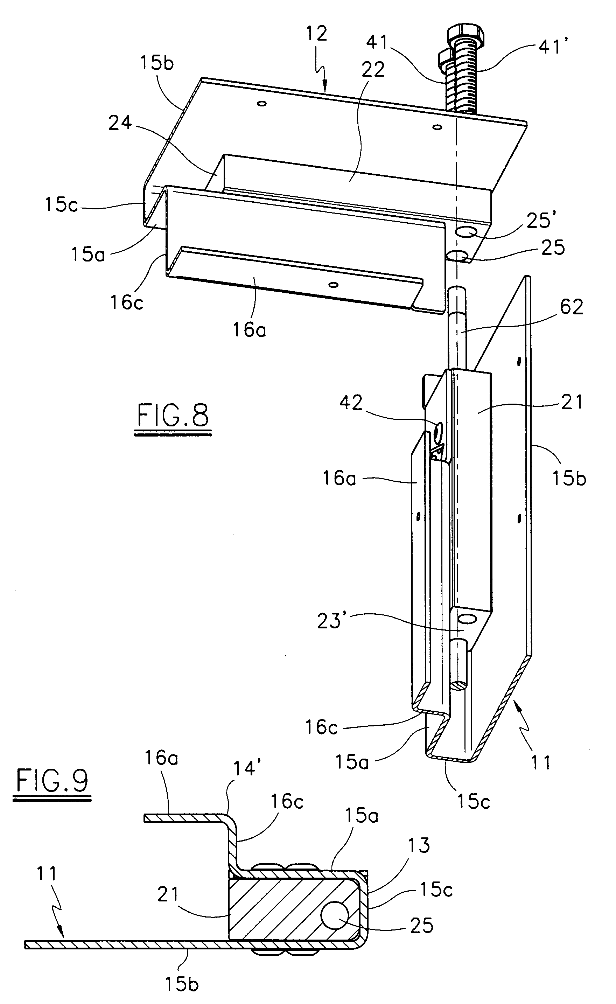

The cross-section of the beams 11 and 12 possesses at least one C-shaped portion (see Figures 6 and 9 in particular) composed of an inner side wall 15a, an outer side wall 15b and a front wall 15c. Said portion 13 is identical in all the four beams 11, 12.

According to the embodiment shown in the figures, besides said portion 13, the cross-section of the beams 11 and 12 possesses a further portion 14' and 14'' respectively, of greater size, into which the portion 13 opens, and which receives by insertion the rear edge of the insulated panels 5 (see Figures 6 and 9). The portion 14' of the vertical beams 11 is usually, but not necessarily, narrower than the portion 14'' of the horizontal beams 12. Said portions 14' and 14'' are each composed of a front wall 16c, an adjacent wall 16a, and the wall 15b.

The cross-section of the beams 11, 12 can however be different from that shown, for example it can consist of the C-shaped portion 13 alone.

As is well known, the ends of the beams 11 and 12 are usually cut to a suitably shaped step profile, so that when they are fitted together the walls 15a, 15b and 15c blend together with continuity, and without steps or gaps.

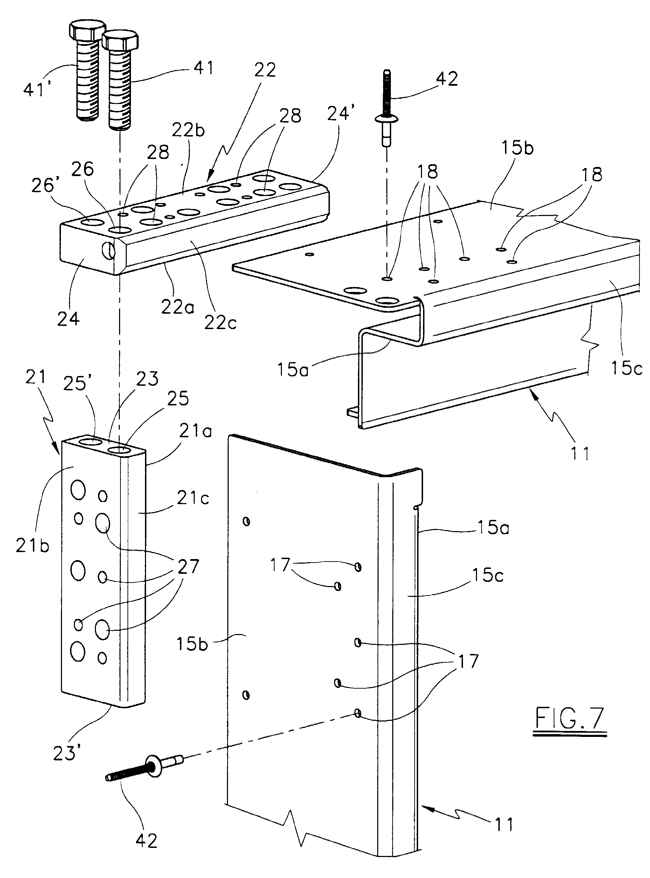

For example, with reference to Figures 7, 8, 10A and 10B, the end of the vertical beam 11 comprises a first step 111 projecting longitudinally upwards, an intermediate second step 112, and a lower third step 113. The end of the horizontal beam 12 comprises a first step 121 projecting longitudinally outwards, an intermediate second step 122 and a rearward third step 123. The edges of said steps mate to form two solid figures joined together without gaps or discontinuities.

According to the invention, four pairs of rigid connection blocks 21 and 22 are provided, one pair for each frame vertex, to be each inserted into said C-shaped portion of a respective beam.

Each block 21, which is intended for a vertical beam 11, is of parallelepiped shape, with three flat longitudinal faces 21a, 21b and 21c, pairs of which are mutually perpendicular, to be brought into coplanar contact with the inner surfaces of the walls 15a, 15b, 15c of the portion 13 of a beam 11; likewise, each block 22, which is intended for a horizontal beam 12, is of parallelepiped shape, with three flat longitudinal faces 22a, 22b and 22c, pairs of which are mutually perpendicular, to be brought into coplanar contact with the inner surfaces of the walls 15a, 15b, 15c of the portion 13 of a beam 12.

A first of the two blocks, for example the block 21 of the vertical beam 11, has a first transverse face 23 perpendicular to the longitudinal faces 21a, 21b, 21c, and to be brought into adjacent contact with the inner longitudinal face 22a of the second block 22 of the horizontal beam 12.

Advantageously, the shape of said blocks 21 is identical to that of the blocks 22, this shape possessing a transverse plane of symmetry (perpendicular to the major side) to enable identical blocks to be used both for the vertical beams and for the horizontal beams, and identical pairs at each frame vertex, hence simplifying their manufacture and use.

Consequently, to achieve said symmetry, the block 21 possesses another face 23' equal to the face 23 and symmetrically opposite it. By rotating the block through 180°, the face 23' can be used as the face for making adjacent contact with the inner longitudinal face 22a.

Moreover, to make the blocks 21 identical to the blocks 22, the longitudinal faces 22a, 22b, 22c of the block 22 are identical to the corresponding faces 21a, 21b, 21c of the block 21. In addition, the second block 22 possesses two transverse faces 24 and 24' which are identical to the transverse faces 23 and 23' of the first block 21.

The first block 21 possesses at least one longitudinal hole, preferably two holes 25 and 25', each of which is provided in said transverse face 23, is threaded and is arranged to engage the shank of a screw 41 and 41' respectively, which clamps and joins the two blocks together. The hole 25 (and the second hole 25' if provided) is formed at a predetermined exact distance from the longitudinal faces 21a, 21b, 21c of the block. The hole 25 passes through the entire block 21.

The second block 22 has at least one through transverse hole, preferably two holes 26 and 26', which pass through and perpendicular to the inner longitudinal face 22a of the block, are coaxial with the hole 25 and with the hole 25' respectively of the first block 21, and are arranged to receive as an exact fit the shank of the clamping screw 41 and 41' respectively.

Each block 21, 22 comprises first transverse holes 27, 28 respectively, which pass through and perpendicular to the inner longitudinal faces 21a, 22a and outer longitudinal faces 21b, 22b of the block 21, 22 respectively. According to an important characteristic of the invention, the first holes 27, 28 are provided at a predetermined exact distance from, in the case of the first block 21 its transverse face, and in the case of the second block the axis of its transverse hole 26.

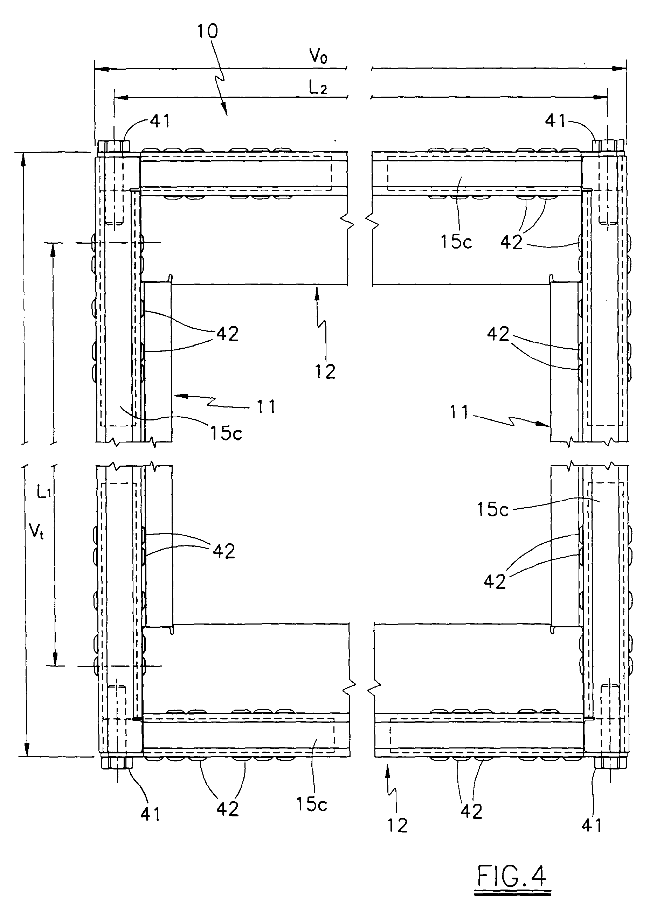

In the beams 11 and 12 there are provided, in proximity to their ends, second through transverse holes 17 and 18 respectively, formed in the inner wall 15a and outer wall 15b of the section bar in a position corresponding to the first transverse holes 27 and 28. The second transverse holes 17, 18 are provided at a predetermined exact distance L1 from the second holes 17, 18 positioned at the other end of the same beam (see Figure 4).

The ends of each beam 11 and 12 are cut transversely in a measured position with reference to the position of the relative through holes 17, 18 positioned close to the end.

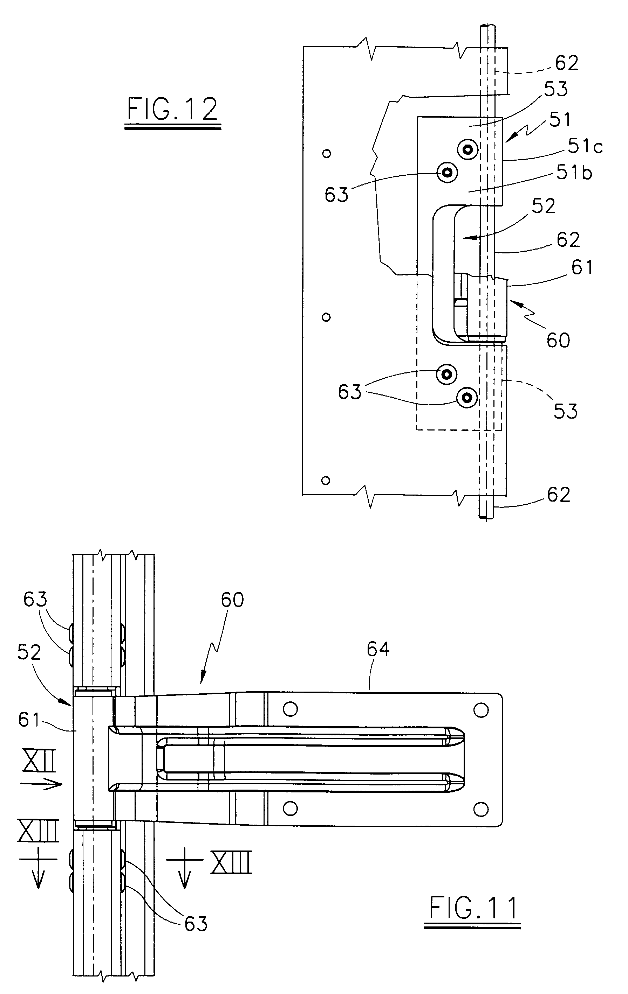

Preferably, the beams 11 and 12 are both formed from a longitudinally extending flat steel plate 11A and 12B respectively of predetermined width, in which the holes 17 or 18 are provided at said predetermined distance L1 apart. The more advanced edge 111a, 121a respectively is then cut transversely, to form the entire step profile of the two ends, the geometrical position of this cut being determined by taking as reference the position of the second holes 17, 18. The edge 111a, 121a is cut at a predetermined distance from those second holes closer to the end of the beam (see Figures 10A and 10B).

The plate 11A, 11B is then cold-bent along longitudinal lines P1, P2, P3,. . . , these determining the corners of the section bar.

Alternatively, the beams 11, 12 can be obtained from extruded sections in which the holes 17 or 18 are formed at said predetermined distance L1 apart, after which the end edge of the section is cut (with the relative steps), taking as reference the position of the second holes 17, 18.

In any event, the second holes 17, 18 are provided in a position such as to mate with the holes 27, 28 of the block 21, 22 when this is inserted into coplanar contact with the inner surfaces of the front walls 15a, 15b, 15c of the relative beam 11, 12. The length of the beam 11, 12, in particular its maximum length, is determined by the distance L1 between the holes 17, 18 positioned at the two ends. More precisely, it equals the value L1 plus double the distance between the edge 111a, 121a and the second holes 17, 18.

Each block 21, 22 is fixed to the end of the respective beam 11, 12 by fixing means in the form of rivets 42 inserted through the first holes 27, 28 provided in the block 21, 22 and through the second holes 17, 18 provided in the section bar. This fixing is done after bringing the longitudinal front face 21c, 22c of the block into coplanar contact with the inner surface of the front wall 15a of the beam 11, 12. When in this relative position, the first holes provided in the blocks are coaxial with the second holes provided in the section bar. The fixing means 42 which is inserted through the transverse holes 17, 18, 27, 28 has a diameter equal to the diameter of the first transverse holes.

Instead of rivet means 42 other equivalent means can be used, such as transverse pins inserted as an exact fit into the holes.

Said second holes 17, 18 provided in the walls 15a, 15b, 15c of the section bar are in the shape of a slot elongate in the transverse direction. The major dimension of the slot is greater than the diameter of the first holes 27, 28 of the block. This serves to absorb any displacement between the position of the holes 17, 18 in the section bar and the holes 27, 27 arising during metalworking, in particular during the bending of the plates 11A, 12A. The minor dimension of the slot (in the longitudinal direction) is equal to the diameter of the first holes 27, 28 of the blocks, so that the relative position between the beams 11, 12 and blocks 21, 22 in the longitudinal direction is constant and precise.

Consequently the blocks 21 and 22 are fixed to the respective beams in a predetermined and exactly determinable relative longitudinal position, determined by the positions of the first holes 27, 28 in relation to the positions of the second holes 17, 18. The relative transverse position is exactly determined and is predetermined in that the front face 21c, 22c of the blocks is brought into contact with the front wall 15a of the beams.

Besides the contact between their front face 21c, 22c and the front wall 15a, the blocks 21 and 22 also have their inner longitudinal faces 21a, 22a and outer longitudinal faces 21b, 22b in coplanar contact with the inner surface of the inner lateral wall 15a and outer lateral wall 15b.

Consequently the width R2 (distance between the face 21a, 22a and the opposite face 21b, 22b) determines the width of the portion 13 of the beams. More precisely, said width is equal to the value N1 plus double the thickness of the plates 11A, 12A.

The first holes 27, 28 are positioned in the relative block 21, 22 symmetrically about its transverse plane of symmetry, so that when in use the block can be rotated through 180 degrees.

After constructing the beams with the predetermined dimensions and after fixing the blocks 21, 22 to the respective beams 11, 12 in a mutual predetermined relationship determined by coincidence between the first holes 27, 28 and the second holes 17, 18, the beams 11 and 12 are fixed together by forcibly clamping the blocks 21 and 22 together by means of the screws 41 and 41', which are inserted through the through holes 26, 26' of the second block 22 and engage in the holes 25, 25' of the first block 21.

When assembled in this manner the frame has a predetermined exact geometry for the following reasons.

The presence of the blocks 21 and 22 precisely determines the width of the portion 13.

The blocks 21 and 22 are formed with a virtually exact geometrical shape and are fixed in a predetermined exact relative position. In particular they determine rigorous right angles between the sides of the frame. In addition the front longitudinal faces 21c and 22c lie exactly in the same common plane, this also being consequently so for the front walls 15c of the beams 11 and 12, given that they rest against these faces.

The length of the outer sides of the frame 10 is exactly predetermined, in that:

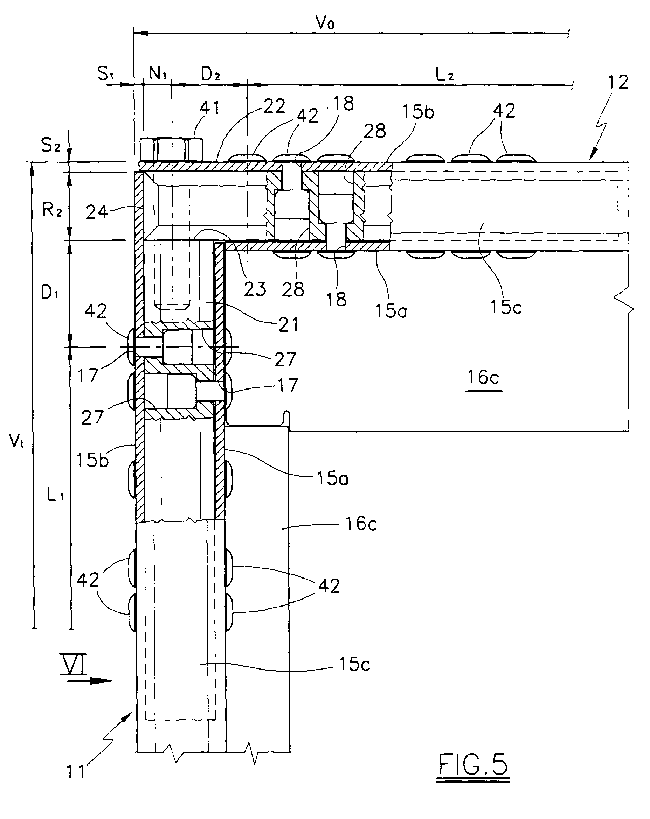

1] - the length of the outer vertical side Vt (see Figures 4 and 5) is given by the relationship:

$Vt = L1 + (2 \times D1) + (2 \times R2) + (2 \times S2)$ where:

L1 is the distance between the axes of the holes 17 positioned at the two ends of the beam 11,

D1 is the distance between the axes of the holes 27 of the first block 21 and the transverse face 23,

R2 is the width of the second block 22 (dimension in the vertical direction), and

S2 is the thickness of the plate which forms the second beam 12; and

2] - the length of the outer horizontal side Vo is given by the relationship:

$Vo = L2 + (2 \times D2) + (2 \times N1) + (2 \times S1)$ where:

L2 is the distance between the axes of the holes 18 positioned at the two ends of the beam 12,

D2 is the distance between the axes of the holes 28 of the second block 22 and the axis of the transverse hole 26,

N1 is the distance between the axis of the transverse hole 25 of the first block 21 and its outer longitudinal face 21b, and

S1 is the thickness of the plate which forms the first beam 11.

Given that the axes of the first and second holes mate, and given that the values L1, L2, D1, D2, R2, N1, S1 and S2 are values which can be defined exactly, the values Vo and Vt are also exact.

After assembling the beams 11 and 12 by joining the blocks 21 and 22 together, the same beams can be welded together by the usual method.

Hence by virtue of the invention, the components of the frame 10 can be constructed with dimensions which vary from case to case (in practice the beams can be formed "to size" on the basis of the personal requirements of the van body customer), and the frame then be assembled in an extremely simple and rapid manner, without the aid of any external equipment, while at the same time obtaining a frame of extremely precise geometry (geometrical shape and dimensions).

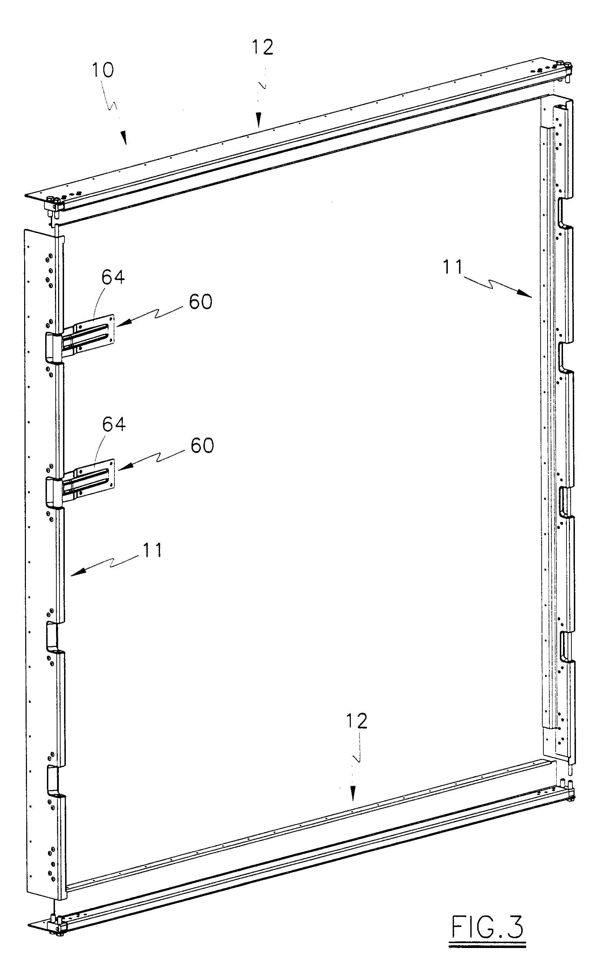

As is usual on heat-insulating van bodies, the illustrated frame carries hinges 60 to which the doors are fixed for closing the opening left by the frame 10, and hence define the rear face of the body. Figure 3 shows only some of these hinges 60.

According to a further important characteristic of the invention, the axis of said longitudinal hole 25 of the first block 21 is positioned coaxial to the axis of rotation of the door hinges 60.

In a preferred embodiment, the hinges 60 each comprise a rigid third block 51 to be inserted and fixed into said C-shaped portion 13. Said third block 51 is of parallelepiped shape comprising three flat longitudinal faces 51a, 51b and 51c, mutually perpendicular in pairs, to be brought into coplanar contact with the inner surfaces of the walls 15a, 15b, 15c of the portion 13 of a vertical beam 11. The block 61 has an overall C-shape defined by a large intermediate recess 52 able to receive a hinge bush 61 such that it can rotate, and two whole portions 53 positioned on one side and the other of the recess 52. In these two portions 53 there are provided two coaxial longitudinal holes 54 able to receive as an exact fit a common cylindrical rod 62 insertable longitudinally through the two holes 54 to define the rotation pin for the hinge 60. A single rod 62 of suitable length is provided to pass through the blocks 51 of all the hinges 60 positioned on one and the same beam, and hence acts as the pin for all these hinges.

The bush 61 is joined to a bracket 64 to be fixed to the door panel.

The two longitudinal holes 54 are provided at a predetermined exact distance from the longitudinal faces 51a, 51b, 51c of the block 51, namely at the distances at which the hole 25 of the first block 21 lie from the like faces of the block 21.

In each block 51 there are provided third transverse through holes 55 perpendicular to the inner longitudinal face 51a and outer longitudinal face 51b at a predetermined exact distance apart and from the front longitudinal face 51c of the block.

In the beam 11 carrying the hinges 60 there are provided fourth transverse holes 65 through the inner wall 15a and outer wall 15b of the section bar, in a position corresponding to said third holes 55 of the block 51. The fourth holes 65 are provided in each beam 11 at a distance apart equal to the predetermined distance between the first transverse holes, and at a distance from the inner surface of the front wall 15c substantially equal to the distance between the holes 55 and the face 51c of the block 51.

Each third block 51 is fixed to the respective beam 11 by rivet-type fixing means 63 (in particular identical to said means 41) or equivalent, inserted through the third holes 55 of the block 51 and through the fourth holes 65 of the section bar, after bringing the front longitudinal face 51c of the block 51 into coplanar contact with the inner surface of the front wall 15c of the beam. The fourth holes 65 are preferably of slot shape elongate in the transverse direction, the minor dimension (in the longitudinal direction) being equal to the diameter of the third holes 55 and the major dimension (in the transverse direction) being greater than this diameter to absorb any metalworking inaccuracies. The fixing means 63 inserted through the holes 65 and 55 has a diameter equal to the diameter of the third holes 55.

The diameter of the holes 25 is such as to enable the cylindrical rod 62 to pass. This, together with the fact that the axis of these holes is coaxial with the axis of the holes 54, enables the cylindrical rod 62 to be inserted longitudinally through the holes 54 of the third blocks 51 and through said hole 25 of the first block 21, before the two blocks 21 and 22 are joined together by the screws 41.

By virtue of this further characteristic of the invention, the frame 10 has the axes of its hinges 60 (axes of the rods 62) positioned in a precise predetermined position within the cross-section of the beams 11, and in particular relative to the front wall 16c of said beams 11, against which the gasket provided on the door panel is intended to abut.

In practice, this enables the door panels to be constructed in a programmed manner independently of the frame 10, so rationalizing their manufacture. The resultant panels exactly correspond with the assembled frame 10, without requiring any adaptation or adjustment.

Numerous modifications of a practical and applicational nature can be made to the invention, but without leaving the scope of the inventive idea as claimed below.

**Claims**

1. A system for constructing a rectangular frame for a heat-insulating van body, said frame being formed from beams (11, 12) consisting of segments of profiled section bars the cross-section through which has at least one C-shaped portion (13), characterised by comprising:

    - for each frame vertex, a pair of rigid mutual connection blocks (21, 22) shaped to be rigidly joined together in pairs at a right angle, with mutual contact between one face of one and one face of the other, and each to be inserted into the C-shaped portion (13) of a respective beam;

- each block (21, 22) being of parallelepiped shape and having three flat longitudinal faces, pairs of which are mutually perpendicular, and which are to be brought into coplanar contact with the inner surfaces of the C-shaped portion (13) of the beam;

- connection means (41, 41') to rigidly join the two blocks (21, 22) together at a right angle, with mutual contact between a contact face (23) of the one and a contact face (22a) of the other;

- each block (21, 22) having first transverse holes (27, 28) passing perpendicularly through the inner and outer longitudinal faces of the block and provided at a predetermined exact distance from elements for connecting the two blocks together;

- at the ends of the beams there being provided second transverse through holes (17, 18) formed in the inner and outer walls of the section bar, in a position corresponding with the first transverse holes (27, 28) of the block when this is inserted into coplanar contact with the inner surfaces of the front walls (15a, 15b, 15c) of the relative beam, said second holes (17, 18) being provided at a predetermined exact distance from the second holes (17, 18) positioned at the other end of the same beam, this distance determining the length of the side of the frame;

- each block (21, 22) being fixed to the end of the respective beam by rivet-type fixing means, or equivalent, inserted through said first transverse holes (27, 28) provided in the block and through said second transverse holes (17, 18) provided in the section bar, after bringing the front longitudinal face (21c, 22c) of the block (21, 22) into coplanar contact with the inner surface of the front wall (15c) of the beam (11, 12).

2. A system as claimed in claim 1, characterised in that:

- a first (21) of the two blocks has a transverse face (23) perpendicular to the longitudinal faces and arranged to be brought into coplanar contact with the inner longitudinal face (22a) of the second block (22), and at least one hole (25) of longitudinal axis provided in said transverse face (23) to engage the shank of a screw (41) for clamping the two blocks (21, 22) together, said longitudinal hole (25) being provided at a predetermined exact distance from the longitudinal faces (21a, 21b, 21c) of the block;

- said second block (22) has at least one through hole (26) passing through and perpendicular to the inner longitudinal face (22a) of the block coaxial with the longitudinal hole (25) of the first block (21), and arranged to receive the shank of the clamping screw (41) as an exact fit;

- said first transverse holes (27, 28) being provided at a predetermined exact distance from the transverse face (23) in the case of the first block (21), and from the axis of said through hole (26) in the case of the second block (22);

- said blocks (21, 22) being joined together by at least one connection screw (41) which is inserted through the through hole (26) of the second block (22) and engages in the longitudinal hole (25) of the first block (21).

3. A system as claimed in claim 1, characterised in that said second transverse holes (17, 18) provided in the inner and outer walls of said section bar are elongate in a transverse direction, their minor dimension being equal to the diameter of the first transverse holes (27, 28) and their major dimension being greater than this diameter to absorb any metalworking inaccuracies, the fixing means inserted through said transverse holes (17, 18; 27, 28) having a diameter equal to the diameter of the first transverse holes (27, 28).

4. A system as claimed in claim 1, in which the van body comprises at least one door with hinges (60) applied to the frame, for closing the rear face of the body, characterised in that the axis of said longitudinal hole (25) provided in the transverse face (23) of the first block (21) is positioned coaxial to the axis of rotation of the door hinges, the first block (21) being associated with the beam (11) carrying the hinges.

5. A system as claimed in claim 4, characterised in that the hinges each comprise a rigid third block (51) to be inserted into and fixed in said C-shaped portion (13), and a common cylindrical rod insertable longitudinal through the blocks (21, 51) to define the hinge rotation pins, said cylindrical rod (62) being insertable through the relative third blocks (51) by passing through said longitudinal hole (25) provided in the first block (21),.

6. A system as claimed in claim 5, characterised in that:

- said third block (51) is in the form of a parallelepiped comprising three flat longitudinal faces (51a, 51b, 51c), pairs of which are mutually perpendicular, and which are to be brought into coplanar contact with the inner surfaces of the C-shaped portion (13) of the beam (11), said third block (51) also comprising:

- an intermediate recess (52) able to receive the hinge bush (61) such that it can rotate;

- two portions (53) positioned on one side and the other of the recess (52) and in which there are provided two coaxial longitudinal holes (54) able to receive said cylindrical rod (62) as an exact fit, said longitudinal holes (54) being provided at a predetermined exact distance from the longitudinal faces of the block;
- third transverse holes (55) through and perpendicular to the inner and outer longitudinal faces of the block at a predetermined exact distance apart and from the front longitudinal face (51c) of the block;
- in the beam (11) carrying the hinges (60) there being provided fourth transverse holes (65) through the inner and outer walls of the beam, in a position corresponding to said third transverse holes (55), said fourth holes (65) being provided in each beam (11) at a distance apart equal to the predetermined distance between the third transverse holes (55);
- each third block (51) being fixed to the respective beam (11) by rivet-type fixing means 63 or equivalent, inserted through said third transverse holes (55) provided in the block (51) and through said fourth transverse holes (65) provided in the beam, after bringing the front longitudinal face (51c) of the block into coplanar contact with the inner surface of the front wall (15c) of the beam.

7. A system as claimed in claim 1, characterised in that said fourth holes (65) are of elongate shape in the transverse direction, the minor dimension being equal to the diameter of the third transverse holes (55) and the major dimension being greater than this diameter to absorb any metalworking inaccuracies, the fixing means (63) inserted through said transverse holes (55, 65) having a diameter equal to the diameter of the third transverse holes (55).

8. A method for constructing a rectangular frame for a heat-insulating van body, the frame being formed from beams consisting of segments of profiled section bars the cross-section through which has at least one C-shaped portion, said body being formed from panels insulated with heat-insulating material which are secured by one edge to said frame, characterised by comprising the following operations:

- constructing rigid blocks (21, 22) shaped to be rigidly joined together in pairs at a right angle, with mutual contact between one face of one and one face of the other, a pair of blocks being provided for each vertex of the frame;
- inserting said rigid blocks (21, 22) into said C-shaped portions (13) at the ends of the respective beams, each block having a parallelepiped shape to be brought into coplanar contact with the inner surfaces of the C-shaped portion (13) of the beam;
- forming in each block (21, 22) first transverse holes (27, 28) passing through and perpendicular to the inner longitudinal faces (21a, 22a) and outer longitudinal faces (21b, 22b) of the block (21, 22), said first holes (27, 28) being provided at a predetermined exact distance from elements for connecting the two blocks together;
- in the ends of the beams, forming second transverse holes (17, 18) through the inner and outer walls of the beam in a position corresponding to the first transverse holes (27, 28), the second transverse holes (17, 18) provided at one end of the beam being formed at a predetermined exact distance from the second holes (17, 18) provided at the other end of the same beam, in order to define the length of the frame side;
- transversely cutting the ends of each beam (11, 12) in a measured position with reference to the position of the relative second transverse holes (17, 18) positioned close to the respective end of the beam;
- fixing each block (21, 22) to the end of the respective beam by rivet-type fixing means or equivalent, inserted through said first transverse holes (27, 28) provided in the block and through said second transverse holes (17, 18) provided in the beam, the fixing being carried out after positioning the front longitudinal face of the block (21, 22) in coplanar contact with the inner surface of the front wall (15c) of the beam (11, 12);
- rigidly joining the two blocks (21, 22) together at a right angle to each other, with mutual contact between a contact face of the one and a contact face of the other, by connection means.

9. A method as claimed in claim 8, characterised in that:

- each said block (21, 22) is of parallelepiped shape and has three flat longitudinal faces pairs of which are perpendicular to each other, to be positioned in coplanar contact with the inner surfaces of the C-shaped portion (113) of the beam;
- a first (21) of the two blocks having a transverse face (23), perpendicular to the longitudinal faces, to be brought into coplanar contact with the inner longitudinal face (22a) of the second block (22), and at least one screw hole (25) of longitudinal axis provided in said transverse face (23), for engagement with the shank of a screw (41) for clamping the two blocks (21, 22) together, said longitudinal hole (25) being provided at a predetermined exact distance from the longitudinal face of the block;

- said second block (22) having at least one through hole (26) passing perpendicularly through the inner longitudinal face of the block and coaxial to the longitudinal hole (25) of the first block (21), to receive the shank of the clamping screw (41) as an exact fit;

- said first transverse holes (27, 28) being formed at a predetermined exact distance from the transverse face (23) in the case of the first block (21), and from the axis of said own screw hole (26) in the case of the second block (22);

- said blocks (21, 22) being joined together by at least one connection screw (41, 41'), which is inserted through the through hole (26, 26') of the second block (22) and engages in the screw hole (25, 25') of the first block.

10. A method as claimed in claim 8, in which the van body comprises at least one door with hinges (60) applied to the frame, for closing the rear face of the body, characterised in that the axis of said longitudinal hole (25) provided in the transverse face (23) of the first block (21) is positioned coaxial to the axis of rotation of the door hinges, the first block (21) being associated with the beam (11) carrying the hinges.

11. A method as claimed in claim 10, characterised by inserting a third rigid block (51), one for each hinge, into said C-shaped portions (13) in correspondence with the hinging points, and by inserting a common cylindrical rod (62) defining the hinge rotation pins longitudinally through the relative third blocks (51) by passing through said longitudinal hole (25) provided in the first block (21), before the two blocks (21) and (22) are joined together by means of the screws (41).

12. A system for constructing a rectangular frame for a heat-insulating van body, the frame being formed from beams consisting of segments of profiled section bars the cross-section through which has at least one C-shaped portion, in which the body comprises at least one door with hinges applied to the frame, for closing the rear face of the body, characterised by comprising:

- a third rigid block (51), one for each hinge, to be inserted into said C-shaped portion (13) of the beam (11) carrying the hinges;

- said third block (51) having a parallelepiped shape comprising three flat longitudinal faces, pairs of which are mutually perpendicular, and which are to be brought into coplanar contact with the inner surfaces of the C-shaped portion (13) of the beam (11), said block comprising:

- an intermediate recess (52) able to receive the hinge bush (61) such that it can rotate;

- two portions (53) positioned on one side and the other of the recess (52) and in which there are provided two coaxial longitudinal holes (54) able to receive as an exact fit a common cylindrical rod (62) insertable longitudinally through the blocks (51) to define the hinge rotation pins, said longitudinal holes (54) being provided at a predetermined exact distance from the longitudinal faces of the block;

- third transverse holes (55) through and perpendicular to the inner and outer longitudinal faces of the block (51) at a predetermined exact distance apart and from the front longitudinal face (51c) of the block;

- in the beam (11) carrying the hinges (60) there being provided fourth transverse holes (65) through the inner and outer walls of the beam, in a position corresponding to said third transverse holes (55), said fourth transverse holes (65) being provided in each beam at a distance apart equal to the predetermined distance between the third transverse holes (55);

- each third block (51) being fixed to the respective beam (11) by rivet-type fixing means 63 or equivalent, inserted through said third transverse holes (55) provided in the block and through said fourth transverse holes (65) provided in the beam, after bringing the front longitudinal face (51c) of the block (51) into coplanar contact with the inner surface of the front wall (15c) of the beam.

13. A system as claimed in claim 12, characterised in that said fourth holes (65) are of elongate shape in the transverse direction, the minor dimension being equal to the diameter of the third transverse holes (55) and the major dimension being greater than this diameter to absorb any metalworking inaccuracies, the fixing means (63) inserted through said transverse holes (55, 65) having a diameter equal to the diameter of said third transverse holes (55).

FIG.1

FIG.2

12

10

11

64

60

64

60

11

12

FIG.3

FIG.4

FIG.5

## FIG.6

41' 41

12 22 15b

13

15c

15a

3a 16a 16c

14"

21 11

15b 42

15c

IX IX

11 42

11

## FIG.10A

112 111 111a

113

17

P₁ 11a

P₂ P₃

17

113 111a

112 111

121a 121 122

123

18 18

18

P₂ P₁

P₃ ## FIG.10B

12a

18 123

121a 121 122

41' 41 22 28 24' 42

22b 28 24 15b

26' 26 18 18

26

24 22a 22c

15a 15c

11

21 25' 23

25

21a

21b 21c

27 15a

15c

17

27 15b

17

23' 42

FIG.7

42 11

FIG.8

FIG.9

FIG.12

FIG.11

FIG.13

51

63

55

63

65

55

51b

51a

62

54

51c

51

53

51c

51a

55

54

52

51c

51b

53

54

FIG.14

55